# EUROPÄISCHE PATENTANMELDUNG

(11) **EP 1 985 173 A2**
(43) Veröffentlichungstag der Anmeldung: **29.10.2008**
(21) Anmeldenummer: 08004328.4
(22) Anmeldetag: 08.03.2008
(51) Int. Cl.: A01G 23/06, B27G 13/10

(54) **Schneideinsatz für eine Baumstumpffräse**

(30) Priorität: 23.04.2007 DE 102007019357
(71) Anmelder: BETEK Bergbau- und Hartmetalltechnik Karl-Heinz Simon GmbH & Co. KG, 78733 Aichhalden (DE)
(72) Erfinder: Essig, Wolfgang, 72348 Rosenfeld (DE); Wöhrstein , Thomas, 78733 Aichhalden (DE)
(74) Vertreter: Fleck, Hermann-Josef

(57) **Zusammenfassung**

Die Erfindung betrifft einen Schneideinsatz für eine Baumstumpffräse oder dergleichen mit einem Fräszahn, der einen Fräszahnkopf und einen Schaft aufweist, wobei der Schaft zwei Seitenflächen aufweist, die in Vorschubrichtung des Fräszahnes verlaufen, und wobei der Fräszahnkopf entgegen der Vorschubrichtung über dem Schaft vorstehenden Vorsprung mit einer Stützfläche aufweist.

Bei einem solchen Schneideinsatz ergibt sich dann eine hohe Betriebssicherheit und Standzeit, wenn vorgesehen ist, dass der Schaft einen entgegen der Vorschubrichtung abstehenden Ansatz trägt, der im Abstand zu der Stützfläche des Vorsprunges angeordnet ist.

## Beschreibung

Die Erfindung betrifft einen Schneideinsatz für eine Baumstumpffräse oder dergleichen mit einem Fräszahn, der einen Fräszahnkopf und einen Schaft aufweist, wobei der Schaft zwei Seitenflächen aufweist, die in Vorschubrichtung des Fräszahnes verlaufen, und wobei der Fräszahnkopf einen entgegen der Vorschubrichtung über dem Schaft vorstehenden Vorsprung mit einer Stützfläche aufweist.

Ein derartiger Schneideinsatz ist aus der EP 690 21 215 T2 bekannt. Der in diesem Dokument beschriebene Schneideinsatz weist einen Fräszahn mit einem Fräszahnkopf und einem unmittelbar daran angeschlossenen Schaft auf. Der Schaft ist im Querschnitt in etwas rechteckförmig ausgebildet, so dass er zwei zueinander parallele Breitseiten aufweist. In diese Breitseiten sind muldenförmige Eintiefungen eingearbeitet.

Der Fräszahn kann mit einer Halterung seitlich an einer Drehscheibe befestigt werden. Hierzu weist die Halterung einen Schlitz auf, der den Schaft aufnimmt. Der Fräszahn wird dann am Schaft zwischen der Halterung und der Seitenfläche der Drehscheibe geklemmt gehalten. Um den Schaft auch formschlüssig an der Halterung festlegen zu können, weist diese einen Zapfen auf, der in die muldenförmige Eintiefung im Schaft eingreift. Der Fräszahnkopf stützt sich auf einem ebenen Stützabschnitt der Halterung ab. Die während des Betriebseinsatzes auftretenden Kräfte werden vom Fräszahnkopf in diesen Stützabschnitt abgeleitet. Im Laufe des Betriebseinsatzes arbeitet sich die Stützfläche infolge der stoßartigen Belastungen ab. Der Fräszahn verkippt dann in dem Schlitz um eine von der Verbindung muldenförmige Eintiefung und Zapfen gebildete Schwenkachse. Die Betriebskräfte werden dann zunehmend über den Schaft in den Zapfen eingetragen. Dann kann der durch die muldenförmige Eintiefungen geschwächte Schaft hier brechen oder der Zapfen abscheren.

Es ist Aufgabe der Erfindung, einen Schneideinsatz der eingangs erwähnten Art zu schaffen, der sich durch eine gute Standzeit und eine hohe Betriebsicherheit auszeichnet.

Diese Aufgabe wird dadurch gelöst, dass der Schaft einen entgegen der Vorschubrichtung abstehenden Ansatz trägt, der im Abstand zu der Stützfläche des Vorsprunges angeordnet ist. Bei dieser Anordnung wird der Fräszahn über den in die Aufnahme der Halterung eingreifenden Ansatz des Fräszahns sicher formschlüssig festgelegt. In seiner nicht verschlissenen Ausgangsstellung stützt sich der Fräszahn mit seinem Vorsprung und/oder Ansatz gegenüber dem Halter ab. Wenn nun verschleißbedingt eine Abarbeitung der korrespondierenden Abstützabschnitte des Halters auftritt, dann bleibt der Fräszahn gleichwohl sicher abgestützt, ohne dass die Gefahr eines Schaftbruches entsteht.

Der Ansatz kann dann eine zuverlässige und stabile Abstütztstelle bieten, wenn vorgesehen ist, dass der Ansatz sich quer zur Vorschubrichtung über die gesamte Schaftbreite erstreckt.

Gemäß einer bevorzugten Ausgestaltungsvariante der Erfindung ist es vorgesehen, dass der Fräszahnkopf einen Schneideinsatz aus Hartwerkstoff trägt, dass der Schneideinsatz eine stegartige Schneidkante aufweist, die eine Mulde des Schneideinsatzes teilweise umläuft, und dass die die Mulde bildende Fläche in eine Ableitfläche des Fräszahnes zumindest bereichsweise übergeleitet ist.

Mit der stegartigen Schneidkante entsteht eine scharfe Schneidkontur, mit geringem Eindringwiderstand. Der abgetragene Span kann über die Mulde und die Ableitfläche mit geringem Widerstand abfließen.

Um den Schaft im besonders beanspruchten Übergangsbereich zwischen Schaft und Fräszahnkopf zuverlässig vor Bruch zu schützen, kann es erfindungsgemäß vorgesehen sein, dass der Fräszahn auf der in Vorschubrichtung gewandten Vorderseite eine Schürze aufweist, die den Fräszahnkopf in Vorschubrichtung über den Schaft verbreitert, und dass dieser Verbreiterungsbereich sich in Schaftlängsrichtung über den zwischen dem Vorsprung und dem Ansatz gebildeten Abstandsbereich zumindest teilweise erstreckt. Die Schürze und der Ansatz verbreitern dann den Schaftquerschnitt.

Dabei kann es dann auch zudem vorgesehen sein, dass die Ableitfläche sich vorderseitig über die Schürze erstreckt.

Ein besonders widerstandsarmer Spanabfluss kann dabei dadurch erreicht werden, dass die Ableitfläche von einer konkaven Fläche erzeugt wird.

Eine weitere Erfindungsvariante kann dergestalt sein, dass der Fräszahnkopf entgegen der Vorschubeinrichtung eine konvexe Freifläche aufweist.

Gegenstand der Erfindung ist auch eine Kombination mit einem Schneideinsatz und einer Halterung, wobei die Halterung einen Schlitz in einem Basisteil aufweist, wobei der Schneideinsatz mit seinem Schaft in den Schlitz eingesetzt ist, und dass das Basisteil eine Aufnahme aufweist, in die der Fräszahn mit seinem Ansatz eingreift. Hierbei kann eine verschleißoptimierte Werkzeugauslegung dadurch erreicht werden, dass die Ableitfläche und/oder die Freifläche des Fräszahns in Formflächen der Halterung übergehen.

Die Erfindung wird im Folgenden anhand eines in den Zeichnungen dargestellten Ausführungsbeispieles näher erläutert. Es zeigen:
- Figur 1: in perspektivischer Explosionsdarstellung einen Fräszahn und eine Halterung und
- Figur 2: die Anordnung gemäß Figur 1 in Zusammenbaudarstellung und in Seitenansicht

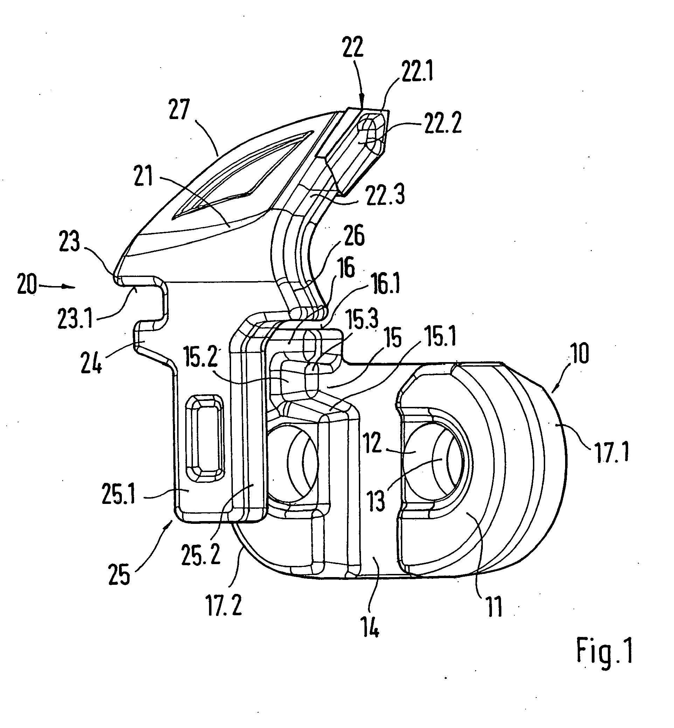

Die Figur 1 zeigt eine Halterung 10 mit einem Basisteil 11, das als Schmiedeteil ausgebildet ist. In das Basisteil 11 ist ein Schlitz 14 eingetieft. Beidseitig des Schlitzes 14 ist jeweils eine, als Durchgangsbohrung ausgeführte Schraubaufnahme 12 vorgesehen. Auf der der Bildebene abgewandten Vorderseite der Halterung 10 sind die Schraubaufnahmen 12 mittels Einsenkung 13 erweitert. Diese dienen zur versenkten Aufnahme der Schraubenköpfe von Befestigungsschrauben, die durch die Schraubaufnahmen 12 hindurchgeführt sind.

Im Anschluss an den Schlitz 14 weist das Basisteil 11 eine Aufnahme 15 auf. Diese wird von einer Stützfläche 15.1, einer Stirnfläche 15.2 und einer Deckseite 15.3 begrenzt. Sie ist entgegen der Werkzeugvorschubrichtung (in der Bildebene gemäß Figur 1 von links nach rechts) eingetieft.

Dabei wird die Deckseite 15.3 von einem Ansatz 16 gebildet. Der Ansatz 16 weist an seiner der Deckseite 15.3 abgewandten Oberseite einen Stützabschnitt 16.1 auf.

Die Halterung 10 dient zur Fixierung eines Fräszahns 20. Der Fräszahn 20 weist einen Fräszahnkopf 21 auf, an dem sich ein Schaft 25 anschließt. Der Fräszahnkopf 21 ist mit einer Aufnahme versehen, in die ein Schneidelement 22, bestehend aus Hartmetall eingelötet ist. Das Schneidelement 22 weist eine U-förmig umlaufende stegartige Schneidkante 22.1 auf, die eine Mulde 22.2 umgibt. Die Mulde 22.2 geht in eine vordere Ableitfläche 22.3 am Fräszahnkopf 21 über. Diese konkave Ableitfläche 22.3 erstreckt sich über eine vorderseitige Schürze 26, die in Werkzeugvorschubrichtung über den Schaft 25 vorsteht.

Rückseitig weist der Fräszahnkopf 21 im Anschluss an das Schneidelement 22 eine konvex gewölbte Freifläche 27 auf.

Der Schaft 25 wird von zwei zueinander parallelen, sich in Vorschubrichtung erstreckenden Seitenflächen 25.1 begrenzt. Diese sind über Querflächen 25.2 miteinander verbunden.

Im Bereich der rückseitigen Querfläche 25.2 steht ein Ansatz 24 entgegen der Vorschubrichtung vor. Der Ansatz 24 steht im Abstand zu einer Stützfläche 23.1, die von einem über den Schaft 25 vorstehenden Vorsprung 23 gebildet ist. Wie der Figur 1 entnehmbar ist, ist der Abstandsbereich zwischen der Stützfläche 23.1 und dem Ansatz 24 von der Schürze 26 überbrückt, so dass sich hier eine Querschnittsverbreiterung ergibt.

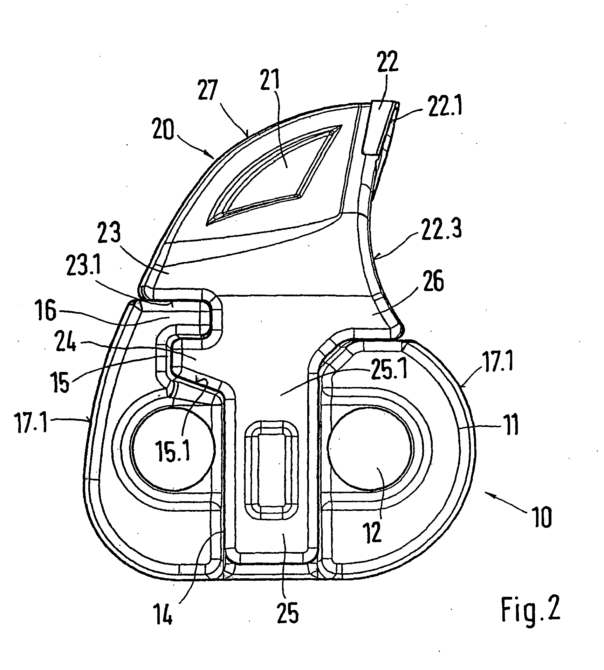

Der Fräszahn 20 kann derart in die Halterung 10 eingesetzt werden, dass der Schaft 26 im Schlitz 14 und der Ansatz 24 in der Aufnahme 15 zum Liegen kommt. Der Fräszahn 20 stützt sich mit seiner Stützfläche 23.1 auf dem Stützabschnitt 16.1 und/oder mit seinem Ansatz 24 auf der Stützfläche 15.1 ab. Vorliegend ist, wie die Figur 2 zeigt, die Stützfläche 23.1 direkt auf den Stützabschnitt 16.1 aufgesetzt, während der Ansatz 24 mit geringem Spiel in der Aufnahme 15 gehalten ist.

Wenn sich während des Betriebseinsatzes die Stützabschnitt 16.1 abarbeitet, trifft der Ansatz 24 auf die Stützfläche 15.1, wodurch sich eine zusätzliche, verschleißmindernde Abstützung ergibt.

Wie die Figur 2 weiter zeigt, gehen die Freifläche 27 und die Ableitfläche 22.3 in konvexe Formflächen 17.1 der Halterung 10 über, so dass sich eine Werkzeuggeometrie ergibt, die dem abgetragenen Gut wenig verschleißfördernden Widerstand entgegensetzt.

## Patentansprüche

1. Schneideinsatz für eine Baumstumpffräse oder dergleichen mit einem Fräszahn (20), der einen Fräszahnkopf (21) und einen Schaft (25) aufweist, wobei der Schaft (25) zwei Seitenflächen (25.1) aufweist, die in Vorschubrichtung des Fräszahnes (20) verlaufen, und wobei der Fräszahnkopf (20) entgegen der Vorschubrichtung einen über dem Schaft (25) vorstehenden Vorsprung (23) mit einer Stützfläche (23.1) aufweist,
**dadurch gekennzeichnet,**
**dass** der Schaft (25) einen entgegen der Vorschubrichtung abstehenden Ansatz (24) trägt, der im Abstand zu der Stützfläche (23.1) des Vorsprunges (23) angeordnet ist.

2. Schneideinsatz nach Anspruch 1,
**dadurch gekennzeichnet,**
**dass** der Ansatz (24) sich quer zur Vorschubrichtung über die gesamte Schaftbreite erstreckt.

3. Schneideinsatz nach Anspruch 1 oder 2,
**dadurch gekennzeichnet,**
**dass** der Fräszahnkopf (21) einen Schneideinsatz (22) aus Hartwerkstoff trägt, dass der Schneideinsatz (22) eine stegartige Schneidkante (22.1) aufweist, die eine Mulde (22.2) des Schneideinsatzes (22) teilweise umläuft, und dass die die Mulde (22.2) bildende Fläche in eine Ableitfläche (22.3) des Fräszahnes (20) zumindest bereichsweise übergeleitet ist.

4. Schneideinsatz nach einem der Ansprüche 1 bis 3,
**dadurch gekennzeichnet,**
**dass** der Fräszahn (20) auf der in Vorschubrichtung gewandten Vorderseite eine Schürze (26) aufweist, die den Fräszahnkopf (21) in Vorschubrichtung über den Schaft (25) verbreitert, und
**dass** dieser Verbreiterungsbereich sich in Schaftlängsrichtung über den zwischen dem Vorsprung (23) und dem Ansatz (24) gebildeten Abstandsbereich zumindest teilweise erstreckt.

5. Schneideinsatz nach Anspruch 5,
**dadurch gekennzeichnet,**
**dass** die Ableitfläche (22.3) sich vorderseitig über die Schürze (26) erstreckt.

6. Schneideinsatz nach Anspruch 4 oder 5,
**dadurch gekennzeichnet,**
**dass** die Ableitfläche (22.3) von einer konkaven Fläche erzeugt wird.

7. Schneideinsatz nach einem der Ansprüche 1 bis 6,
**dadurch gekennzeichnet,**
**dass** der Fräszahnkopf (21) entgegen der Vorschubeinrichtung eine konvexe Freifläche (27) aufweist.

8. Schneideinsatz-Halterungs-Einheit mit einem Schneideinsatz gemäß einem der Ansprüche 1 bis 7 und einer Halterung (10), die einen Schlitz (14) in einem Basisteil (11) aufweist, wobei der Schneideinsatz mit seinem Schaft (25) in den Schlitz (14) eingesetzt ist, und dass das Basisteil (11) eine Aufnahme (15) aufweist, in die der Fräszahn (20) mit seinem Ansatz (24) eingreift.

9. Schneideinsatz-Halterungs-Einheit gemäß Anspruch 8,
**dadurch gekennzeichnet,**
**dass** die Ableitfläche (22.3) und/oder die Freifläche (27) des Fräszahns (20) in gewölbte Formflächen (17.1; 17.2) der Halterung (10) übergehen.
